Europäisches Patentamt

European Patent Office

Office européen des brevets

(11) Veröffentlichungsnummer: **0 630 332 B1**

(12) **EUROPÄISCHE PATENTSCHRIFT**

(45) Veröffentlichungstag der Patentschrift: **22.11.95**

(51) Int. Cl.⁶: **B60T 13/52**

(21) Anmeldenummer: **93901699.4**

(22) Anmeldetag: **17.12.92**

(86) Internationale Anmeldenummer:
**PCT/EP92/02939**

(87) Internationale Veröffentlichungsnummer:
**WO 93/18948 (30.09.93 93/24)**

(54) **UNTERDRUCK-BREMSKRAFTVERSTÄRKER.**

(30) Priorität: **16.03.92 DE 4208384**

(43) Veröffentlichungstag der Anmeldung:
**28.12.94 Patentblatt 94/52**

(45) Bekanntmachung des Hinweises auf die
Patenterteilung:
**22.11.95 Patentblatt 95/47**

(84) Benannte Vertragsstaaten:
**DE ES FR PT**

(56) Entgegenhaltungen:
**EP-A- 0 501 843**
**DE-A- 3 941 604**
**GB-A- 2 087 496**

(73) Patentinhaber: **ITT Automotive Europe GmbH**
**Guerickestrasse 7**
**D-60488 Frankfurt (DE)**

(72) Erfinder: **BAUER, Jürgen**
**Waldstrasse 24**
**D-6200 Wiesbaden (DE)**
Erfinder: **GRAICHEN, Kai-Michael**
**Kurt-Schumacher-Strasse 21**
**D-6070 Langen (DE)**

## Beschreibung

Die Erfindung betrifft einen Unterdruck-Bremskraftverstärker mit einem Verstärkergehäuse, das durch eine mit einem pneumatischen Differenzdruck beaufschlagbare axial bewegliche Wand in eine Unterdruckkammer und eine Arbeitskammer dichtend unterteilt ist, sowie mit einem den Differenzdruck steuernden, in einem Steuergehäuse angeordneten Steuerventil, das durch einen mittels einer Kolbenstange verschiebbaren, durch eine Kolbenstangenrückholfeder vorgespannten Ventilkolben betätigbar ist, der über eine elastische Reaktionsscheibe in kraftübertragender Verbindung mit einem Kraftabgabeglied (Druckstange) steht und durch einen mit der Kolbenstange zusammenwirkenden, im Steuergehäuse drehbar gelagerten ersten Kolbenteil sowie einen im Steuergehäuse verdrehgesichert geführten, an der Reaktionsscheibe anliegenden zweiten Kolbenteil gebildet ist, die relativ zueinander begrenzt axial bewegbar mittels einer Gewindeverbindung miteinander verbunden sind.

Bei der Serienfertigung von derartigen Unterdruck-Bremskraftverstärkern ist es erforderlich, den Abstand zwischen der Reaktionsscheibe und dem zweiten Kolbenteil, das sogenannte z-Maß, möglichst genau einzustellen, um die von der Automobilindustrie gewünschten Kennlinien zu erreichen. Das einzustellende z-Maß bestimmt dabei das Verhalten des Verstärkers in der Anfangsphase dessen Betätigung, insbesondere die Höhe des sprunghaften Anstiegs der Ausgangskraft bei der Betätigung mit einer vorher festgelegten Eingangskraft (sog. Springereffekt).

Bei einem einstellbaren Unterdruck-Bremskraftverstärker, der aus der DE-OS 36 41 604 bekannt ist, erfolgt die Einstellung des gewünschten z-Maßes bei nicht eingebauter Kolbenstange, die erst, nachdem der Einstellvorgang beendet worden ist, in einen im ersten Kolbenteil angeordneten, elastischen ringförmigen Kolbenstangenhalter hineingedrückt wird. Als nachteilig wird jedoch bei dem vorbekannten Unterdruck-Bremskraftverstärker die Tatsache empfunden, daß der aus elastischem Material bestehende Kolbenstangenhalter keine hohen Ausreißkräfte übertragen kann, die vom Automobilhersteller gefordert werden.

Es ist daher Aufgabe der vorliegenden Erfindung, bei einem Unterdruck-Bremskraftverstärker der eingangs genannten Gattung Maßnahmen anzugeben, die eine Einstellung des gewünschten z-Maßes bei komplett zusammengebautem Gerät ermöglichen.

Eine erste erfindungsgemäße Lösung der vorhin gestellten Aufgabe besteht darin, daß eine koaxial zur Kolbenstange axial verschiebbar angeordnete rohrförmige Hülse vorgesehen ist, die mit dem ersten Kolbenteil in Eingriff bringbar ist, um sein Verdrehen im Sinne einer Einstellung der axialen Länge des Ventilkolbens bei zusammengebautem Unterdruck-Bremskraftverstärker zu ermöglichen.

Im Rahmen einer zweiten erfindungsgemäßen Lösung wird vorgeschlagen, daß mit dem ersten Kolbenteil eine koaxial zur Kolbenstange angeordnete rohrförmige Hülse formschlüssig verbunden ist, die ein Verdrehen des ersten Kolbenteils im Sinne einer Einstellung der axialen Länge des Ventilkolbens bei zusammengebautem Unterdruck-Bremskraftverstärker ermöglicht und die nach der Einstellung im Steuergehäuse verdrehgesichert wird.

Weitere Einzelheiten und vorteilhafte Merkmale der Erfindung gehen aus den Unteransprüchen und der folgenden Beschreibung von zwei Ausführungsbeispielen im Zusammenhang mit der beiliegenden Zeichnung hervor. Dabei zeigt:

Fig. 1     einen nach der ersten Lösung aufgebauten Unterdruck-Bremskraftverstärker im axialen Schnitt;

Fig. 2     die leicht modifizierte Steuergruppe des Unterdruck-Bremskraftverstärker nach Fig. 1 im axialen Teilschnitt;

Fig. 3     eine dritte Ausführung der Steuergruppe des in Fig. 1 gezeigten Unterdruck-Bremskraftverstärkers nach der Erfindung;

Fig. 4     die Steuergruppe eines nach der zweiten Lösung aufgebauten Unterdruck-Bremskraftverstärkers nach der Einstellung;

Fig. 5     den Schnitt entlang der Schnittlinie A-A nach Fig. 4;

Fig. 6     den Schnitt entlang der Schnittlinie B-B nach Fig. 4;

Fig. 7     eine Ansicht aus der Richtung "C" nach Fig. 4 (ohne Reaktionsscheibe);

Fig. 8     eine mögliche Gestaltungsvariante des in Fig. 4 gezeigten Ventilkolbenbereichs.

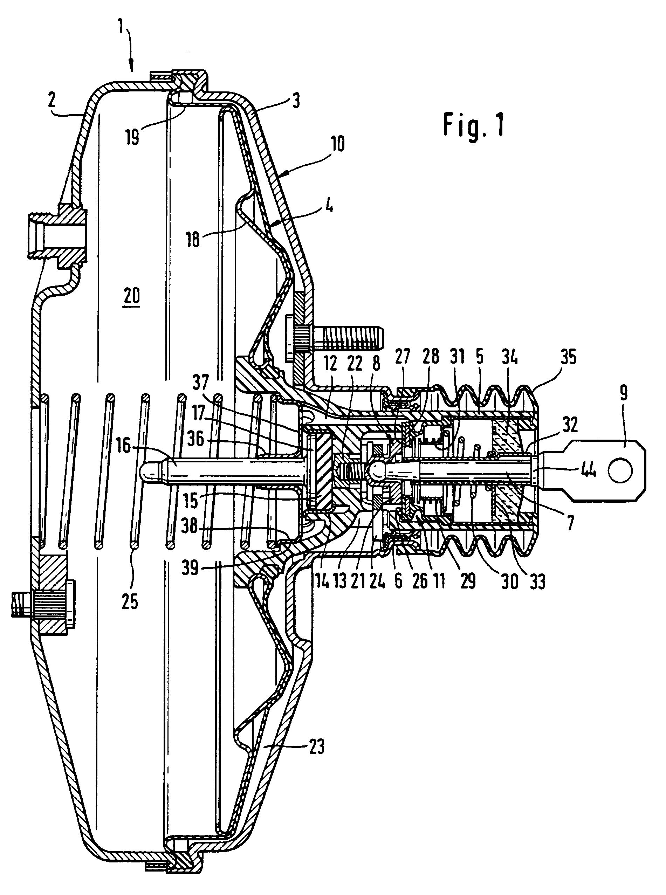

Das Verstärkergehäuse 10 des in Fig. 1 dargestellten erfindungsgemäßen Unterdruck-Bremskraftverstärkers 1 besteht aus zwei in einer Verbindungsebene miteinander lancierten Gehäuseteilen 2,3. Der Innenraum des Verstärkergehäuses 10 wird durch eine bewegliche Wand 4 in eine Unterdruckkammer 20, die über einen pneumatischen Anschluß mit einer Unterdruckquelle verbunden ist (nicht näher dargestellt), und eine Arbeitskammer 23 unterteilt.

Die durch einen metallischen Membranteller 18 sowie eine in der Arbeitskammer 23 daran anliegende Rollmembran 19 gebildete bewegliche Wand 4 ist an einem Steuergehäuse 5 befestigt, das mit einem Gleitführungsring 6 die Arbeitskammer 23 nach außen hin abdichtet.

Im Inneren des Steuergehäuses 5 ist eine aus Kolbenstange 7 und Ventilkolben 8 zusammengesetzte Steuerstange axial verschiebbar angeordnet, die über einen Gabelkopf 9 mit einem Bremspedal eines Kraftfahrzeuges verbindbar ist. Das Steuergehäuse 5 enthält ferner ein Steuerventil 11, das von dem Ventilkolben 8 betätigt wird und über Luftführungs-Kanäle 12,13 die Druckdifferenz zwischen Unterdruckkammer 20 und Arbeitskammer 23 steuert. Das Steuergehäuse 5 weist ferner eine Stufenbohrung 14 auf, in deren Abschnitt größeren Durchmessers eine Reaktionsscheibe 15 sowie ein Kopfflansch 17 einer Druckstange 16 angeordnet sind, die einen an der Stirnseite des Verstärkergehäuses 10 befestigten, nicht näher dargestellten Hauptbremszylinder betätigt.

Zum Zurückstellen der beweglichen Wand 4 ist eine Rückstellfeder 25 vorgesehen, die zwischen dem Steuergehäuse 5 und dem Boden des Verstärkergehäuses 10 bzw. 2 eingespannt ist.

Der Ventilkolben 8, der in der Lösestellung über ein Querglied 24 am Gleitführungsring 6 anschlägt, ist dabei vorzugsweise zweiteilig ausgebildet und besteht aus einem mit der Kolbenstange 7 verbundenen ersten Kolbenteil 21 sowie einem mittels einer Gewindeverbindung mit dem ersten Kolbenteil 21 verbundenen zweiten Kolbenteil 22, der verdrehgesichert in einem zweiten Abschnitt kleineren Durchmessers der Stufenbohrung 14 radial geführt axial verschiebbar angeordnet ist und dessen mit der Reaktionsscheibe 15 in Berührung stehende Fläche die Übersetzung des Bremsgerätes bestimmt. Der Abstand z zwischen dem zweiten Kolbenteil 22 und der Reaktionsscheibe 15 stellt ein funktionswichtiges Maß des Bremskraftverstärkers dar, dessen Bedeutung im nachfolgenden Text näher erläutert wird.

Die Steuerbaugruppe des Unterdruck-Bremskraftverstärkers ist in der Bereitschaftsstellung dargestellt, d. h. in einer Stellung, in der die beiden Kammern 20,23 voneinander getrennt sind. In dieser Stellung liegen nämlich beide Dichtsitze 26,27 des Steuerventils 11 an der Dichtfläche eines Tellerventils 28 an, das in Richtung auf die beiden Dichtsitze 26,27 mittels einer Tellerventilfeder 29 vorgespannt ist, wobei der am ersten Kolbenteil 21 ausgebildete Dichtsitz 27 von einer Kolbenstangenrückholfeder 30 gegen das Tellerventil 28 gedrückt wird. Die Kolbenstangenrückholfeder 30 stützt sich mit einem Ende an einem hülsenförmigen Tellerventilhalter 31 ab, an dem gleichzeitig die Tellerventilfeder 29 abgestützt ist. Mit ihrem anderen Ende stützt sich die Kolbenstangenrückholfeder 30 an einer koaxial zur Kolbenstange 7 axial verschiebbar angeordneten, unter der Vorspannung der Kolbenstangenrückholfeder 30 an einem an der Kolbenstange 7 ausgebildeten Ringbund 44 axial anliegenden rohrförmigen Hülse 32. An der Hülse 32 liegt eine ringförmige Scheibe 33 an, die als Anlage für einen im Ansaugbereich des Steuergehäuses 5 angeordneten Luftfilter 34 dient, der von einem im Tellerventilhalter 31 eingeknöpften Ringwulst einer das Steuergehäuse 5 schützenden Schutzkappe 35 gehalten wird.

Um eine präzise Führung der Druckstange 16 zu erzielen, ist eine Führungshülse 36 vorgesehen, deren radialer Flansch 37 sich am Steuergehäuse 5 abstützt und in eine zylindrische Führungsfläche 38 übergeht, die mit einem am Steuergehäuse 5 ausgebildeten zylindrischen Abschnitt 39 zusammenwirkt, so daß die auf die Druckstange 16 einwirkenden Biegekräfte wirksam aufgenommen werden. Der im Bereich der Mündung des Luftführungskanals 12 mit mehreren Öffnungen versehene radiale Flansch 37 wird gegen Herausfallen durch die Rückstellfeder 25 gesichert, die sich an einem an die zylindrische Führungsfläche 38 anschließenden radialen, näher nicht bezeichneten Kragen abstützt.

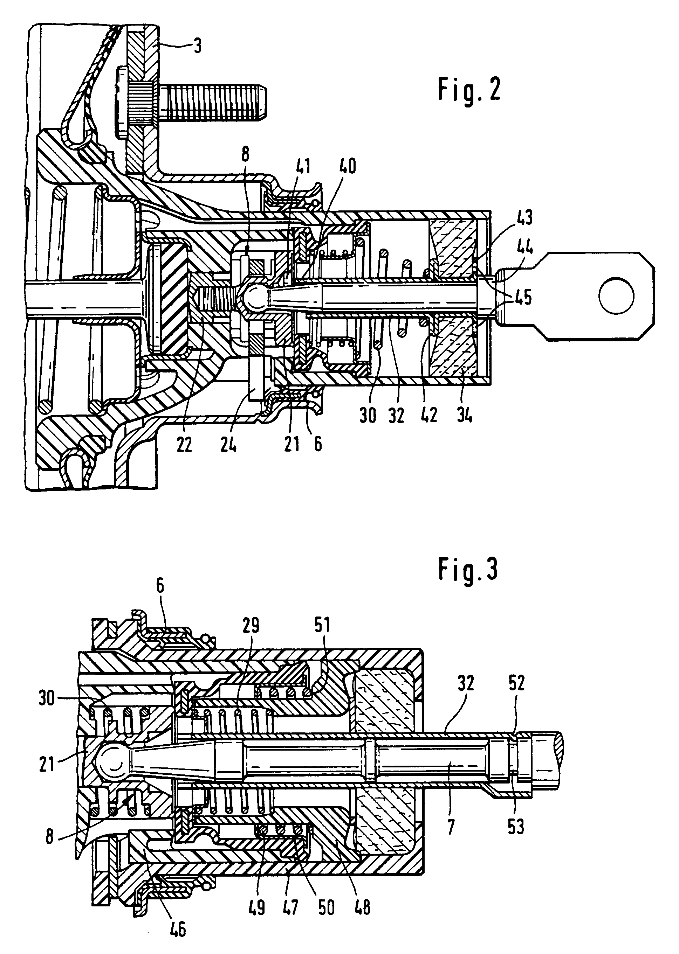

Wie insbesondere der Fig. 2 zu entnehmen ist, weist die Hülse 32 an ihrem dem Ventilkolben 8 zugewandten Ende vorzugsweise zwei radial gegenüberliegend angeordnete Vorsprünge bzw. Nasen 40 auf, die in entsprechende im ersten Kolbenteil 21 vorgesehene Aussparungen bzw. Vertiefungen 41 einführbar sind. Dabei ist es erforderlich, die Hülse 32 so zu gestalten, daß sie ein Drehmoment übertragen kann. Zu diesem Zweck ist beispielsweise das dem Ventilkolben 8 abgewandte Ende der in Fig. 1 gezeigten Hülse 32 mit einem ausgeprägten Vielkantprofil versehen. Die in Fig. 2 dargestellte Hülse 32 ist dagegen mit zwei im Abstand voneinander ausgebildeten radialen Erweiterungen 42,43 versehen, zwischen denen der Luftfilter 34 angeordnet ist. An der dem Ventilkolben 8 näher liegenden Erweiterung 42 stützt sich die Kolbenstangenrückholfeder 30 ab, während die am Ringbund 44 der Kolbenstange 7 axial anliegende Erweiterung 43 zwei radial gegenüberliegende Öffnungen 45 aufweist, in die ein das Drehmoment aufbringende Einstellwerkzeug eingeführt werden kann.

Bei der in Fig. 3 gezeigten Ausführung ist das Steuergehäuse 5 des erfindungsgemäßen Unterdruck-Bremskraftverstärkers 1 zweiteilig ausgebildet und besteht aus einem die nicht gezeigte bewegliche Wand tragenden, den Ventilkolben 8 führenden ersten Steuergehäuseteil 46 sowie einem das Verstärkergehäuse 10 abdichtenden Gleitführungsring 6 axial anliegenden zweiten Steuergehäuseteil 47. Die Kolbenstangenrückholfeder 30 ist bei der gezeigten Ausführung zwischen dem ersten Kolbenteil 21 und dem ersten Steuergehäuseteil 46 eingespannt, während die Tellerventilfeder 29 an einer mit dem Tellerventil 28 zusammenwirkenden Anschlaghülse 48 abgestützt ist, die im zweiten Steuergehäuseteil 47 gehalten wird.

Außerdem ist eine dritte Druckfeder 49 vorgesehen, die sich einerseits an einer Führung 50 des Tellerventils 28 und andererseits an einer ringförmigen Fläche 51 der Anschlaghülse 48 abstützt und die beiden Steuergehäuseteile 46,47 auseinander hält.

Um die Hülse 32 nach dem beendeten Einstellvorgang auf der Kolbenstange 7 zu fixieren wird die Hülse 32 an ihrem dem Ventilkolben 8 abgewandten Ende mit mindestens einer Einscherung 52 versehen, die in eine in der Kolbenstange 7 ausgebildete Ringnut 53 eingreift und ein axiales Verschieben der Hülse 32 auf der Kolbenstange 7 verhindert.

Bei der Einstellung des gewünschten Abstandes z, im dargestellten Beispiel z = o, wird das Verstärkergehäuse 10 des erfindungsgemäßen Unterdruck-Bremskraftverstärkers an eine nicht gezeigte Unterdruckquelle angeschlossen, derart, daß im Verstärkergehäuse 10 der Betriebsdruck herrscht, der in der Ruhestellung des Unterdruck-Bremskraftverstärkers auftritt. Danach wird auf die Kolbenstange 7 eine vorher festgelegte Eingangskraft, beispielsweise 300 N, übertragen. Dadurch wird der Ventilkolben 8 im Sinne der Belüftung der Arbeitskammer 23 verschoben, so daß eine Verstärkungskraft aufgebaut wird, die zu der an der Kolbenstange 7 eingeleiteten Eingangskraft hinzuaddiert und an der Druckstange 16 als Ausgangskraft gemessen wird.

Ergibt die Messung, daß der Ausgangskraftwert außerhalb eines vorher festgelegten Bereichs - Streubands - liegt, so ist eine entsprechende Korrektur des z-Maßes erforderlich, bei deren Durchführung die relative Lage des zweiten (22) und des ersten Kolbenteils 21 geändert wird. Zu diesem Zweck wird die in Fig. 1 oder Fig. 2 gezeigte Hülse 32 entgegen der Wirkung der Kolbenstangenrückholfeder 30 mittels eines geeigneten Einstellwerkzeuges in die im ersten Kolbenteil 21 dafür vorgesehenen Vertiefungen 41 eingeführt. Anschließend wird in die Hülse 32 ein Drehmoment eingeleitet und der erste Kolbenteil 21 so lange gedreht, bis ein innerhalb des gewünschten Streubands liegender Ausgangskraftwert erreicht ist. Ist das gewünschte z-Maß eingestellt, so wird das Einstellwerkzeug unter gleichzeitigem Wegnehmen der auf die Hülse 32 wirkenden axialen Verschiebekraft entfernt, so daß die Hülse 32 unter der Vorspannung der Kolbenstangenrückholfeder 30 automatisch am Ringbund 44 der Kolbenstange 7 zur Anlage kommt.

Der mit dem ersten Kolbenteil 21 über eine Gewindeverbindung verbundene zweite Kolbenteil 22 wird beispielsweise mit einem Sechskantprofil gegen ein Mitdrehen mit dem ersten Kolbenteil 21 gesichert.

Ein ungewolltes Verdrehen der beiden Kolbenteile 21,22 kann dadurch verhindert werden, daß die Gewindeverbindung mit einer Losdrehsicherung versehen ist. Derartige Maßnahmen bestehen z. B. darin, daß die Gewindeverbindung als selbsthemmendes Gewinde ausgeführt ist, d.h. die Gewinde des ersten Kolbenteils 21 bzw. des zweiten Kolbenteils 22 weisen unterschiedliche Steigungen, Durchmesser bzw. Flankenwinkel auf. Es ist auch denkbar, die Gewindeverbindung mit mikroverkapseltem Klebstoff oder mit einer Lacksicherung oder eine Gewindeformation zu sichern.

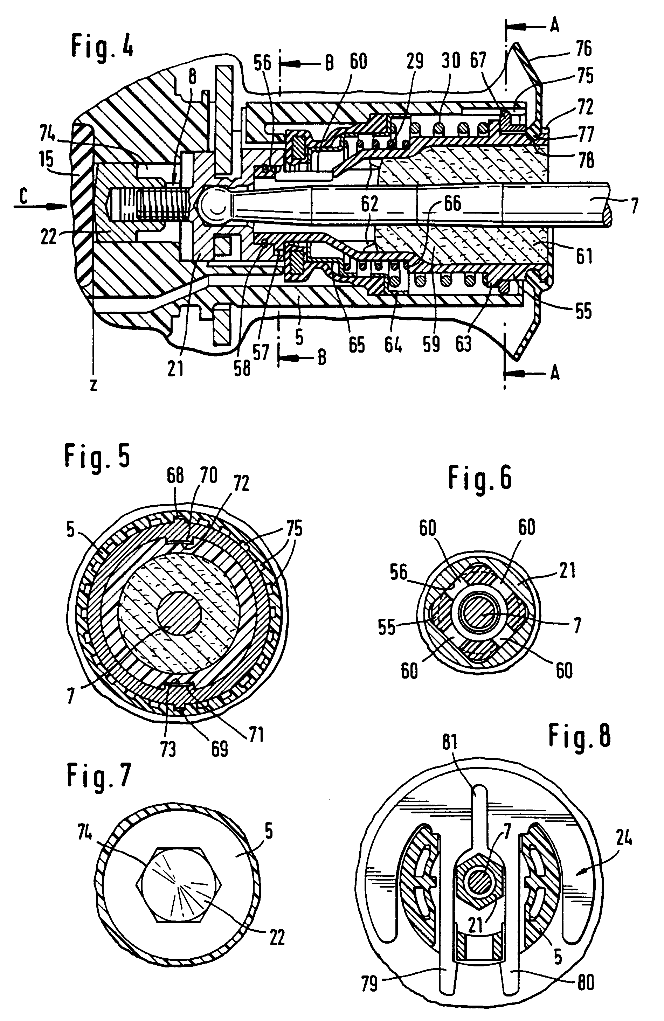

Bei der in Fig. 4 bis 8 gezeigten Ausführungsvariante der Erfindung erfolgt die Einstellung des gewünschten z-Maßes mittels einer koaxial zur Kolbenstange 7 angeordneten rohrförmigen Hülse 55 größeren Durchmessers, die mit dem ersten Kolbenteil 21 formschlüssig verbunden ist. Zu diesem Zweck ist das in eine entsprechend geformte axiale Ausnehmung 56 im ersten Kolbenteil 21 eingreifende Ende der Hülse 55 als ein Mehrkant, beispielsweise ein Vierkant 57 ausgebildet und im ersten Kolbenteil 21 mittels eines Sicherungsrings 58 gegen axiales Verschieben gesichert. Dabei ist es besonders sinnvoll, wenn die Hülse 55 so gestaltet ist, daß sie im Steuergehäuse 5 einen pneumatischen Strömungskanal 59 begrenzt, der eine Luftzufuhr zum Steuerventil 11 ermöglicht. Aus diesem Grund weist die Hülse 55 in ihrem dem Ventilkolben 8 zugewandten Bereich mehrere, am Umfang gleichmäßig verteilte radiale Öffnungen 60 auf. Im Strömungskanal 59 befindet sich dabei ein Luftfilter 61, der gegen ein axiales Verschieben durch innerhalb der Hülse 55 angeordnete, radial nach innen sich erstreckende Vorsprünge bzw. Nasen 62 gesichert ist. Auf ihrer Oberfläche ist die Hülse 55 mit einem radial nach außen sich erstreckenden Bund 63 versehen, an dem die Kolbenstangenrückholfeder 30 abgestützt ist, die mit ihrem Ende an einem verhältnismäßig kurzen Tellerventilhalter 64 anliegt. Die vorhin erwähnte Tellerventilfeder 29 ist zwischen einer Tellerventilführung 65 und einer an der Hülse 55 ausgebildeten radialen Ringfläche 66 eingespannt.

Um die Hülse 55 nach der beendeten Einstellung fixieren zu können, ist ein ringförmiges Sicherungselement 67 vorgesehen, das auf die Hülse 55 aufgeschoben werden kann. Das Sicherungselement 67 weist sowohl zwei auf seinem Außenumfang radial gegenüberliegend ausgebildete, nach außen sich erstreckende erste Vorsprünge 68,69 als auch zwei auf seinem Innenumfang den ersten Vorsprüngen 68,69 gegenüberliegend ausgebildete ringsegmentförmige Führungsflächen 70,71, die in in der Hülse 55 ausgeformte axiale Nuten 72,73 eingeführt werden können.

Bei der in Fig. 4 bis 8 dargestellten Ausführung erfolgt die Einstellung des gewünschten z-Maßes durch Einleiten eines Drehmomentes an dem dem Ventilkolben 8 abgewandten Ende der Hülse 55. Das eingeleitete Drehmoment wird über die formschlüssige Verbindung zwischen der Hülse 55 und dem ersten Kolbenteil 21 mittels des Vierkantes 57 sowie über die Gewindeverbindung zwischen den beiden Kolbenteilen 21,22 auf den zweiten Kolbenteil 22 übertragen. Da der zweite Kolbenteil 22 zumindest teilweise durch einen Vielkant, im dargestellten Beispiel einen Sechskant 74, im Steuergehäuse 5 verdrehgesichert geführt ist, wird die Drehbewegung in eine translatorische Bewegung umgewandelt, die eine einwandfreie Einstellung des Abstandes zwischen der Reaktionsscheibe 15 und der Stirnfläche des zweiten Kolbenteils 22 erlaubt.

Die Verdrehsicherung der Hülse 55 nach dem beendeten Einstellvorgang erfolgt durch ihre formschlüssige Verbindung mit dem Steuergehäuse 5. Zu diesem Zweck weist das Steuergehäuse 5 auf seinem Innenumfang regelmäßig verteilte Nuten 75 auf, die beim Aufstecken des Sicherungselementes 67 auf die Hülse 55 die am Sicherungselement 67 angeformten Vorsprünge 68,69 aufnehmen. Das Sicherungselement 67 kommt dabei zur Anlage an der der Kolbenstangenrückholfeder 30 abgewandten Seite des an der Hülse 55 angeformten Bundes 63 und wird anschließend durch einen Ringwulst 77 einer das Steuergehäuse 5 vor Verunreinigungen schützenden elastischen Schutzkappe 76 gehalten, der in einer in der Hülse 55 ausgebildeten Umfangsnut 78 eingeknöpft ist.

Die Fig. 8 zeigt schließlich eine andere Möglichkeit der Losdrehsicherung des ersten Kolbenteils 21, der in der Lösestellung des Bremskraftverstärkers am Querglied 24 anliegt. Zu diesem Zweck ist der zwischen zwei Armen 79,80 des Quergliedes 24 liegende Bereich des ersten Kolbenteils 21 als ein Mehreckprofil ausgebildet, während das Querglied 24 mit einer Aussparung 81 versehen ist, die ein kurzzeitiges Auseinanderdrücken der beiden Arme 79,80 ermöglicht. Bei einem Verdrehen des ersten Kolbenteils 21 werden die federnden Arme 79 und 80 des Quergliedes 24 nach außen gedrückt, wobei das dafür erforderliche Drehmoment wesentlich höher ist als das während des Betriebs des erfindungsgemäßen Bremskraftverstärkers auftretende Rückstellmoment. Eine selbständige Lösung der beiden Kolbenteile 21,22 ist somit nicht möglich.

Bezugszeichenliste

| | |
|---|---|
| 1 | Unterdruck-Bremskraftverstärker |
| 2 | Verstärkergehäuseteil |
| 3 | Verstärkergehäuseteil |
| 4 | bewegliche Wand |
| 5 | Steuergehäuse |
| 6 | Gleitführungsring |
| 7 | Kolbenstange |
| 8 | Ventilkolben |
| 9 | Gabelkopf |
| 10 | Verstärkergehäuse |
| 11 | Steuerventil |
| 12 | Luftführungskanal |
| 13 | Luftführungskanal |
| 14 | Stufenbohrung |
| 15 | Reaktionsscheibe |
| 16 | Druckstange |
| 17 | Kopfflansch |
| 18 | Membranteller |
| 19 | Rollmembran |
| 20 | Unterdruckkammer |
| 21 | erster Kolbenteil |
| 22 | zweiter Kolbenteil |
| 23 | Arbeitskammer |
| 24 | Querglied |
| 25 | Rückstellfeder |
| 26 | Dichtsitz |
| 27 | Dichtsitz |
| 28 | Tellerventil |
| 29 | Tellerventilfeder |
| 30 | Kolbenstangenrückholfeder |
| 31 | Tellerventilhalter |
| 32 | Hülse |
| 33 | Scheibe |
| 34 | Luftfilter |
| 35 | Schutzkappe |
| 36 | Führungshülse |
| 37 | Flansch |
| 38 | Führungsfläche |
| 39 | Abschnitt |
| 40 | Vorsprung, Nase |
| 41 | Vertiefung |
| 42 | Erweiterung |
| 43 | Erweiterung |
| 44 | Ringbund |
| 45 | Öffnung |
| 46 | Steuergehäuseteil |
| 47 | Steuergehäuseteil |
| 48 | Anschlaghülse |
| 49 | Druckfeder |
| 50 | Führung |
| 51 | Fläche |
| 52 | Einscherung |
| 53 | Ringnut |
| 54 | |
| 55 | Hülse |
| 56 | Ausnehmung |
| 57 | Mehrkant |
| 58 | Sicherungsring |
| 59 | Strömungskanal |
| 60 | Öffnung |
| 61 | Luftfilter |
| 62 | Nase, Vorsprung |

| | |
|---|---|
| 63 | Bund |
| 64 | Tellerventilhalter |
| 65 | Tellerventilführung |
| 66 | Ringfläche |
| 67 | Sicherungselement |
| 68 | Vorsprung |
| 69 | Vorsprung |
| 70 | Führung |
| 71 | Führung |
| 72 | Nut |
| 73 | Nut |
| 74 | Sechskant |
| 75 | Nut |
| 76 | Schutzkappe |
| 77 | Ringwulst |
| 78 | Nut |
| 79 | Arm |
| 80 | Arm |
| 81 | Aussparung |

**Patentansprüche**

1. Unterdruck-Bremskraftverstärker mit einem Verstärkergehäuse (10), das durch eine mit einem pneumatischen Differenzdruck beaufschlagbare axial bewegliche Wand (4) in eine Unterdruckkammer (20) und eine Arbeitskammer (23) dichtend unterteilt ist, sowie mit einem den Differenzdruck steuernden, in einem Steuergehäuse angeordneten Steuerventil (11), das durch einen mittels einer Kolbenstange (7) verschiebbaren, durch eine Kolbenstangenrückholfeder (30) vorgespannten Ventilkolben (8) betätigbar ist, der über eine elastische Reaktionsscheibe (15) in kraftübertragender Verbindung mit einem Kraftabgabeglied (16) steht und durch einen mit der Kolbenstange zusammenwirkenden im Steuergehäuse (5) drehbar gelagerten ersten Kolbenteil (21) sowie einen im Steuergehäuse (5) verdrehgesichert geführten, an der Reaktionsscheibe (15) anliegenden zweiten Kolbenteil (22) gebildet ist, die relativ zueinander begrenzt axial bewegbar mittels einer Gewindeverbindung miteinander verbunden sind, dadurch **gekennzeichnet**, daß eine koaxial zur Kolbenstange (7) axial verschiebbar angeordnete rohrförmige Hülse (32) vorgesehen ist, die mit dem ersten Kolbenteil (21) in Eingriff bringbar ist, um sein Verdrehen im Sinne einer Einstellung der axialen Länge des Ventilkolbens (8) bei zusammengebautem Unterdruck-Bremskraftverstärker (1) zu ermöglichen.

2. Unterdruck-Bremskraftverstärker nach Anspruch 1, dadurch **gekennzeichnet**, daß Mittel (30) vorgesehen sind, durch die die Hülse (32) nach der Einstellung der axialen Länge des Ventilkolbens (8) außer Eingriff mit dem ersten Kolbenteil (21) gehalten wird.

3. Unterdruck-Bremskraftverstärker nach Anspruch 2, mit einer den Ventilkolben entgegen der Betätigungsrichtung vorspannenden Kolbenstangenrückholfeder, dadurch **gekennzeichnet**, daß die Hülse (32) unter der Vorspannung der Kolbenstangenrückholfeder (30) an der Kolbenstange (7) axial anliegt.

4. Unterdruck-Bremskraftverstärker nach Anspruch 2, dadurch **gekennzeichnet**, daß die Hülse (32) mit mindestens einer Einscherung (52) versehen ist, die mit einer in der Kolbenstange (7) ausgebildeten Ringnut (53) zusammenwirkt.

5. Unterdruck-Bremskraftverstärker nach einem der vorhergehenden Ansprüche, dadurch **gekennzeichnet**, daß die Hülse (32) an ihrem dem Ventilkolben (8) zugewandten Ende vorzugsweise zwei radial gegenüberliegende, axiale Vorsprünge (40) aufweist, die in im ersten Kolbenteil (21) ausgebildete Vertiefungen (41) einführbar sind.

6. Unterdruck-Bremskraftverstärker nach einem der vorhergehenden Ansprüche, dadurch **gekennzeichnet**, daß die Mantelfläche der Hülse (32) als Vielkantprofil ausgebildet ist.

7. Unterdruck-Bremskraftverstärker nach einem der vorhergehenden Ansprüche, wobei das Steuergehäuse einen Luftzufuhrkanal aufweist, und dem ein ringförmiger Luftfilter angeordnet ist, dadurch **gekennzeichnet**, daß die Hülse (32) als Luftfilterhalter dient.

8. Unterdruck-Bremskraftverstärker nach Anspruch 3 und Anspruch 7, dadurch **gekennzeichnet**, daß die Hülse (32) zwei im Abstand voneinander ausgebildete radiale Erweiterungen (42,43) aufweist, zwischen denen der Luftfilter (34) angeordnet ist, wobei die dem Ventilkolben (8) näher liegende Erweiterung (42) der Abstützung der Kolbenstangenrückholfeder (30) dient.

9. Unterdruck-Bremskraftverstärker nach einem der vorhergehenden Ansprüche, dadurch **gekennzeichnet**, daß die Hülse (32) mit der Kolbenstange (7) formschlüssig, beispielsweise durch ein Vielkantprofil, verbunden ist, um ein Drehmoment direkt über die Kolbenstange (7) in die Hülse (32) einzuleiten.

10. Unterdruck-Bremskraftverstärker nach dem Oberbegriff des Anspruches 1, dadurch **gekennzeichnet**, daß mit dem ersten Kolbenteil (21) eine koaxial zur Kolbenstange (7) angeordnete rohrförmige Hülse (55) formschlüssig verbunden ist, die ein Verdrehen des ersten Kolbenteils (21) im Sinne einer Einstellung der axialen Länge des Ventilkolbens (8) bei zusammengebautem Unterdruck-Bremskraftverstärker (1) ermöglicht und die nach der Einstellung im Steuergehäuse (5) verdrehgesichert ist.

11. Unterdruck-Bremskraftverstärker nach Anspruch 10, dadurch **gekennzeichnet**, daß das dem Ventilkolben (8) zugewandte Ende der Hülse (55) als ein mit einer entsprechend geformten axialen Ausnehmung (56) des ersten Kolbenteils (21) zusammenwirkender Mehrkant (57), beispielsweise ein Vierkant, ausgebildet ist und im Ventilkolben (8 bzw.21) mittels eines Sicherungsringes (58) gegen axiales Verschieben gesichert ist.

12. Unterdruck-Bremskraftverstärker nach Anspruch 10, mit einer den Ventilkolben entgegen der Betätigungsrichtung vorspannenden Kolbenstangenruckholfeder, dadurch **gekennzeichnet**, daß die Kolbenstangenrückholfeder (30) an einem radial nach außen sich erstreckenden Bund (63) der Hülse (55) abgestützt ist.

13. Unterdruck-Bremskraftverstärker nach Anspruch 10, dadurch **gekennzeichnet**, daß die Verdrehsicherung der Hülse (55) mittels eines auf die Hülse (55) aufsteckbaren ringförmigen Sicherungselementes (67) erfolgt, das mindestens einen radial außen sich erstreckenden Vorsprung (68) aufweist, der in eine von mehreren, in der Innenwandung des Steuergehäuses (5) verteilt ausgebildeten Nuten (75) einführbar ist.

14. Unterdruck-Bremskraftverstärker nach Anspruch 13, dadurch **gekennzeichnet**, daß das ringförmige Sicherungselement (67) zwei radial gegenüberliegend ausgebildete Vorsprünge (68,69) aufweist.

15. Unterdruck-Bremskraftverstärker nach Anspruch 13, dadurch **gekennzeichnet**, daß das Sicherungselement (67) mindestens eine, vorzugsweise zwei radial innen gegenüberliegend ausgebildete ringsegmentförmige Führungsflächen (70,71) aufweist, die in in der Oberfläche der Hülse (55) entsprechend angeordnete Nuten (72,73) einführbar sind.

16. Unterdruck-Bremskraftverstärker nach Anspruch 12 und 13, dadurch **gekennzeichnet**, daß das Sicherungselement (67) an der der Kolbenstangenrückholfeder (30) abgewandten Seite des Bundes (63) anliegt, und durch einen Ringwulst (77) einer das Steuergehäuse (5) schützenden Schutzkappe (76) gehalten wird, der in einer in der Hülse (55) ausgebildeten Ringnut (78) eingeknöpft ist.

17. Unterdruck-Bremskraftverstärker nach Anspruch 10 und 16, dadurch **gekennzeichnet**, daß der von der Hülse (55) im Steuergehäuse (5) begrenzte Raum als pneumatischer Strömungskanal (59) ausgebildet ist, der eine Luftzufuhr zum Steuerventil (11) dient.

18. Unterdruck-Bremskraftverstärker nach Anspruch 17, dadurch **gekennzeichnet**, daß die Hülse (55) in ihrem dem Ventilkolben (8) benachbarten Bereich radiale Öffnungen (60) aufweist.

19. Unterdruck-Bremskraftverstärker nach einem der Ansprüche 10 bis 18, wobei das Steuerventil durch zwei koaxial zueinander angeordnete Dichtsitze sowie ein mit den Dichtsitzen zusammenwirkendes Tellerventil gebildet ist, das in Richtung auf die Dichtsitze zu durch eine Tellerventilfeder vorgespannt ist, dadurch **gekennzeichnet**, daß die Hülse (55) eine radial außen ausgebildete Ringfläche (66) aufweist, an der die Tellerventilfeder (29) abgestützt ist.

20. Unterdruck-Bremskraftverstärker nach Anspruch 17, dadurch **gekennzeichnet**, daß im Strömungskanal (59) ein Luftfilter (61) angeordnet ist.

21. Unterdruck-Bremskraftverstärker nach Anspruch 20, dadurch **gekennzeichnet**, daß die Hülse (55) radial innenliegende Vorsprünge bzw. Nasen (62) aufweist, die ein axiales Verschieben des Luftfilters (61) in der Luftströmungsrichtung verhindern.

22. Unterdruck-Bremskraftverstärker nach Anspruch 10, wobei ein an einem Verstärkergehäuse in Lösestellung anliegendes Querglied vorgesehen ist, an dem der Ventilkolben anliegt und das zwei parallel zueinander angeordnete, den Ventilkolben bzw. den ersten Kolbenteil umgreifende Arme aufweist, dadurch **gekennzeichnet**, daß der zwischen den Armen (79,80) liegende Bereich des ersten Kolbenteils (21) als Mehrkant ausgebildet ist, wobei das Querglied (24) in seinem die Arme (79,80) verbindenen Teil eine Aussparung (81) aufweist, so daß bei einem Verdrehen des ersten Kolbenteils (21) ein kurzzeitiges Auseinanderdrücken der Arme (79,80) ermöglicht wird.

23. Unterdruck-Bremskraftverstärker nach einem der vorhergehenden Ansprüche, dadurch **gekennzeichnet**, daß die Mantelfläche des zweiten Kolbenteils (21) zumindest teilweise durch ein Mehrkantprofil (74) gebildet ist.

## Claims

1. A vacuum brake power booster with a booster housing (10) which is sealingly subdivided by an axially movable wall (4), being subjectible to a pneumatic pressure differential, into a vacuum chamber (20) and a power chamber (23), and with a control valve (11) which controls the pressure differential and is accommodated within a control housing and which is actuatable by a valve piston (8) being slidable by means of a piston rod (7), being prestressed by a piston rod return spring (30), being in force-transmitting connection with a force-delivering member (16) through an elastic reaction disc (15) and being composed of a first piston part (21), which interacts with the piston rod and is rotatably supported within the control housing (5), and a second piston part (22) which is guided within the control housing (5) so as to be secured against rotation and is in abutment against the reaction disc (15), the piston parts being coupled to each other by means of a threaded union so as to be movable with respect to each other to a limited extent in an axial direction,
   **characterized** in that a tubular sleeve (32) arranged coaxially with the piston rod (7) so as to be slidable in an axial direction is provided which is engageable with the first piston part (21) in order to permit its rotation in the sense of an adjustment of the axial length of the valve piston (8) when the vacuum brake power booster (1) is in the assembled condition.

2. A vacuum brake power booster as claimed in claim 1,
   **characterized** in that a means (30) is provided by which the sleeve (32) is kept out of engagement with the first piston part (21) upon the adjustment of the axial length of the valve piston (8).

3. A vacuum brake power booster as claimed in claim 2, with a piston rod return spring prestressing the valve piston in contrast to the actuating direction,
   **characterized** in that the sleeve (32) is axially abutted against the piston rod (7) under the prestressing action of the piston rod return spring (30).

4. A vacuum brake power booster as claimed in claim 2,
   **characterized** in that the sleeve (32) is provided with at least one mortise (52) which interacts with an annular groove (53) formed in the piston rod (7).

5. A vacuum brake power booster as claimed in any one of the preceding claims,
   **characterized** in that the sleeve (32) is formed at its end facing the valve piston (8) with preferably two axial projections (40) which are disposed radially opposite each other and are introducible into depressions (41) formed in the first piston part (21).

6. A vacuum brake power booster as claimed in any one of the preceding claims,
   **characterized** in that the peripheral surface of the sleeve (32) is configured in the shape of a polyhedral section.

7. A vacuum brake power booster as claimed in any one of the preceding claims, the control housing being furnished with an air supply duct where a ring-shaped air filter is positioned,
   **characterized** in that the sleeve (32) serves as an air filter holder.

8. A vacuum brake power booster as claimed in claim 3 and in claim 7,
   **characterized** in that the sleeve (32) is formed with two radial extensions (42, 43) which are provided at a distance from each other and between which the air filter (34) is disposed, the extension (42) which is positioned nearer to the valve piston (8) serving to support the piston rod return spring (30).

9. A vacuum brake power booster as claimed in any one of the preceding claims,
   **characterized** in that the sleeve (32) is coupled to the piston rod (7) in positive locking engagement, for example, by a polyhedral section, in order to apply a torque directly through the piston rod (7) to the sleeve (32).

10. A vacuum brake power booster according to the preamble of patent claim 1,
    **characterized** in that a tubular sleeve (55) is coupled to the first piston part (21) by positive locking engagement, the tubular sleeve being disposed coaxially with the piston rod (7) and permitting rotation of the first piston part (21) in the sense of an adjustment of the axial length of the valve piston (8) when the vacuum brake power booster (1) is in the assembled condition, while it is secured against rotation in the control housing (5) after the adjustment.

11. A vacuum brake power booster as claimed in claim 10,
   **characterized** in that the end of the sleeve (55) which faces the valve piston (8) is configured as a polyhedron (57), for example, as a square interacting with a correspondingly shaped axial recess (56) of the first piston part (21), and is secured against an axial shift in the valve piston (8, respectively 21) by means of a locking ring (58).

12. A vacuum brake power booster as claimed in claim 10, with a piston rod return spring prestressing the valve piston in opposition to the actuating direction,
   **characterized** in that the piston rod return spring (30) is supported at a radially outwardly extending collar (63) of the sleeve (55).

13. A vacuum brake power booster as claimed in claim 10,
   **characterized** in that the sleeve (55) is secured against rotation by an annular retaining element (67) which is pluggable onto the sleeve (55) and which is formed with at least one radially externally extending projection (68) that is introducible into one of a plurality of grooves (75) in the inside wall of the control housing (5) so as to be spread over it.

14. A vacuum brake power booster as claimed in claim 13,
   **characterized** in that the annular retaining element (67) is formed with two projections (68, 69) which are radially opposite each other.

15. A vacuum brake power booster as claimed in claim 13,
   **characterized** in that the retaining element (67) is formed with at least one, preferably with two ring segment-shaped guide surfaces (70, 71) which are configured radially inside opposite each other and which are introducible into grooves (72, 73) matingly arranged in the surface of the sleeve (55).

16. A vacuum brake power booster as claimed in claims 12 and 13,
   **characterized** in that the retaining element (67) is in abutment against the side of the collar (63) facing away from the piston rod return spring (30) and is retained by a ring-shaped torus (77) of a protecting cap (76) protecting the control housing (5), which torus is coupled into an annular groove (78) formed in the sleeve (55).

17. A vacuum brake power booster as claimed in claims 10 and 16,
   **characterized** in that the space defined in the control housing (5) by the sleeve (55) is configured as a pneumatic duct of flow (59) which serves to allow an influx of air into the control valve (11).

18. A vacuum brake power booster as claimed in claim 17,
   **characterized** in that the sleeve (55) is furnished in its range adjacent to the valve piston (8) with radial openings (60).

19. A vacuum brake power booster as claimed in any one of claims 10 to 18, the control valve being formed of two sealing seats which are disposed coaxially with each other, and a poppet valve which interacts with the sealing seats and is prestressed in the direction of the sealing seats by a poppet valve spring,
   **characterized** in that the sleeve (55) has a radially external annular surface (66) at which the poppet valve spring (29) is supported.

20. A vacuum brake power booster as claimed in claim 17,
   **characterized** in that an air filter (61) is provided in the duct of flow (59).

21. A vacuum brake power booster as claimed in claim 20,
   **characterized** in that the sleeve (55) is formed with projections or noses (62) which are positioned radially inside it and prevent an axial shift of the air filter (61) in the direction of air flow.

22. A vacuum brake power booster as claimed in claim 10, wherein a transverse member is in abutment against a booster housing in the release position, against which transverse member the valve piston is abutted and which is provided with two arms arranged in parallel to each other and encircling the valve piston or the first piston part,
   **characterized** in that the range of the first piston part (21) situated between the arms (79, 80) is configured in the shape of a polyhedron, the transverse member (24) being provided with a recess (81) in its part connecting the arms (79, 80), thereby permitting the arms (79, 80) to be urged apart for a brief period in the event of rotation of the first piston part (21).

23. A vacuum brake power booster as claimed in any one of the preceding claims, **characterized** in that the peripheral surface of the second piston part (21) is constituted at least in part by a polyhedral section (74).

**Revendications**

1. Amplificateur de force de freinage à dépression, comprenant un boîtier d'amplificateur (10), qui est divisé d'une manière étanche en une chambre de dépression (20) et une chambre de travail (23) par une paroi (4) mobile axialement et agencée de façon à pouvoir être soumise à l'action d'une pression différentielle pneumatique, et une valve de commande (11) qui commande la pression différentielle et qui est disposée dans un boîtier de commande et est agencée de façon à pouvoir être actionnée par un piston de valve (8) qui peut être déplacé en translation au moyen d'une tige de piston (7) et est soumis à une précontrainte par un ressort de rappel de tige de piston (30) et qui est en liaison transmettant les forces avec un organe de sortie de force (16) par l'intermédiaire d'un disque élastique de réaction (15), le piston de valve (8) étant formé d'une première partie de piston (21), qui coopère avec la tige de piston et est montée rotative dans le boîtier de commande (5), et d'une seconde partie de piston (22) qui est guidée dans le boîtier de commande (5) en étant immobilisée en rotation et est appliquée sur le disque de réaction (15), ces deux parties de piston étant réunies entre elles de façon à pouvoir être déplacées axialement d'une manière limitée l'une vis-à-vis de l'autre, au moyen d'une liaison filetée, caractérisé en ce qu'il est prévu un manchon tubulaire (32) qui est disposé suivant le même axe que la tige de piston (7) et de façon à pouvoir être déplacé en translation axiale et qui est agencé de façon à pouvoir être amené en prise avec la première partié de piston (21), afin de permettre son déplacement en rotation en vue d'un réglage de la longueur axiale du piston de valve (8) lorsque l'amplificateur de force de freinage à dépression est à l'état monté.

2. Amplificateur de force de freinage à dépression selon la revendication 1, caractérisé en ce qu'il est prévu des moyens (30) au moyen desquels, après le réglage de la longueur axiale du piston de valve (8), le manchon (32) est maintenu hors de prise avec la première partie de piston (21).

3. Amplificateur de force de freinage à dépression selon la revendication 2, comprenant un ressort de rappel de tige de piston soumettant le piston de valve à une précontrainte dans le sens opposé au sens d'actionnement, caractérisé en ce que le manchon (32) est appliqué axialement sur la tige de piston (7) sous l'effet de la précontrainte du ressort de rappel de tige de piston (30).

4. Amplificateur de force de freinage à dépression selon la revendication 2, caractérisé en ce que le manchon (32) est pourvu d'au moins une partie repoussée (52) qui coopère avec une gorge annulaire (53) pratiquée dans la tige de piston (7).

5. Amplificateur de force de freinage à dépression selon l'une des revendications précédentes, caractérisé en ce qu'a son extrémité tournée vers le piston de valve (8), le manchon (32) comporte de préférence deux parties en saillie axiale (40) qui sont diamétralement opposées et qui sont agencées de façon à pouvoir être introduites dans des parties en retrait (41) ménagées dans la première partie de piston (21).

6. Amplificateur de force de freinage à dépression selon l'une des revendications précédentes, caractérisé en ce que la surface extérieure du manchon (32) est réalisée sous une forme à plusieurs pans.

7. Amplificateur de force de freinage à dépression selon l'une des revendications précédentes, dans lequel le boîtier de commande comporte un conduit d'amenée d'air dans lequel est disposé un filtre à air de forme annulaire, caractérisé en ce que le manchon (32) sert de porte-filtre à air.

8. Amplificateur de force de freinage à dépression selon la revendication 3 et la revendication 7, caractérisé en ce que le manchon (32) comporte deux parties plus larges (42, 43) entre lesquelles le filtre à air (34) est disposé, la partie plus large (42) située plus près du piston de valve (8) servant d'appui au ressort de rappel de tige de piston (30).

9. Amplificateur de force de freinage à dépression selon l'une des revendications précédentes, caractérisé en ce que le manchon (32) est relié à la tige de piston (7) par complémentarité de formes, par exemple au moyen d'une forme profilée à plusieurs pans, afin d'introduire directement le couple dans le manchon (32) par l'intermédiaire de la tige de piston (7).

10. Amplificateur de force de freinage selon le préambule de la revendication 1, caractérisé en ce qu'un manchon tubulaire (55) disposé suivant le même axe que la tige de piston (7) soit au relié par complémentarité de formes à la première partie de piston (21), le manchon tubulaire (55) permettant un déplacement en rotation de la première partie de piston (21) en vue d'un réglage de la longueur axiale du piston de valve (8) alors que l'amplificateur de force de freinage à dépression (1) est à l'état monté et ce manchon tubulaire (55) étant immobilisé en rotation dans le boîtier de commande (5) après le réglage.

11. Amplificateur de force de freinage à dépression selon la revendication 10, caractérisé en ce que l'extrémité du manchon (55) qui est tournée vers le piston de valve (8) est réalisée sous une forme à plusieurs pans (57), par exemple un carré, qui coopère avec un évidement axial (56) de la première partie de piston (21) qui a une forme correspondante et en ce qu'elle est immobilisée au moyen d'un circlip (68) vis-à-vis d'une translation axiale dans le piston de valve (8, plus précisément 21).

12. Amplificateur de force de freinage à dépression selon la revendication 10, comprenant un ressort de rappel de tige de piston qui soumet le piston de valve à une précontrainte dans le sens opposé au sens d'actionnement, caractérisé en ce que le ressort de rappel de tige de piston (30) prend appui sur une collerette (63) du manchon (55) qui est orientée radialement vers l'extérieur.

13. Amplificateur de force de freinage à dépression selon la revendication 10, caractérisé en ce que le blocage en rotation du manchon (55) a lieu au moyen d'un élément annulaire de blocage (67) qui est agencé de façon à pouvoir être emboîté sur le manchon (55) et qui comporte au moins une partie en saillie (68) qui est orientée radialement vers l'extérieur et qui est agencée de façon à pouvoir être introduite dans l'une parmi plusieurs rainures (75) pratiquées d'une manière répartie dans la paroi intérieure du boîtier de commande (5).

14. Amplificateur de force de freinage à dépression selon la revendication 13, caractérisé en ce que l'élément annulaire d'immobilisation (67) comporte deux parties en saillie (68, 69) diamétralement opposées.

15. Amplificateur de force de freinage à dépression selon la revendication 13, caractérisé en ce que l'élément de blocage (67) comporte au moins une et de préférence deux surfaces de guidage (70, 71) en forme de segments d'anneau qui sont réalisées intérieurement d'une manière diamétralement opposée et qui sont agencées de façon à pouvoir être introduites dans des rainures (72, 73) disposées d'une manière correspondante à la surface du manchon (45).

16. Amplificateur de force de freinage à dépression selon la revendication 12 ou 13, caractérisé en ce que l'élément de blocage (67) prend appui sur la face de la collerette (63) qui est située à l'opposé du ressort de rappel de tige de piston (30) et est maintenue au moyen d'un rebord annulaire plus épais (77) d'un capuchon de protection (67) qui protège le boîtier de commande (5) et qui s'accroche dans une gorge annulaire (78) pratiquée dans le manchon (55).

17. Amplificateur de force de freinage à dépression selon la revendication 10 ou 16, caractérisé en ce que la cavité délimitée par le manchon (55) dans le boîtier de commande (5) est réalisée sous la forme d'un conduit de passage d'air (79) qui permet un apport d'air à la valve de commande (11).

18. Amplificateur de force de freinage à dépression selon la revendication 17, caractérisé en ce que le manchon (55) comporte des ouvertures radiales (60) dans sa partie voisine du piston de valve (8).

19. Amplificateur de force de freinage à dépression selon l'une des revendications 10 à 18, dans lequel la valve de commande est constituée de deux sièges d'étanchéité, disposés suivant le même axe l'un vis-à-vis de l'autre, et d'un plateau de valve qui coopère avec les sièges d'étanchéité et qui est soumis à une précontrainte en direction des sièges d'étanchéité au moyen d'un ressort de plateau de valve, caractérisé en ce que le manchon (55) comporte une surface annulaire (66) qui est formée radialement à l'extérieur et sur laquelle le ressort de plateau de valve (29) prend appui.

20. Amplificateur de force de freinage à dépression selon la revendication 17, caractérisé en ce qu'un filtre à air (61) est disposé dans le conduit de passage (59).

21. Amplificateur de force de freinage à dépression selon la revendication 20, caractérisé en ce que le manchon (55) comporte des parties en saillie ou becs (62) qui sont situés radialement à l'intérieur et qui empêchent un déplacement en translation axiale du filtre à air (61) dans le sens du passage de l'air.

22. Amplificateur de force de freinage à dépression selon la revendication 10, dans lequel il est prévu une pièce transversale qui, dans la position inactive, est appliquée sur un boîtier d'amplificateur et sur laquelle le piston de valve est appliqué, cette pièce transversale comportant deux bras qui sont disposés parallèlement l'un à l'autre et qui entourent le piston de valve, plus précisément la première partie de piston, caractérisé en ce que la zone de la première partie de piston (21) qui est située entre les bras (79, 80) est réalisée avec une forme à plusieurs pans, tandis que la pièce transversale (24) comporte une partie évidée (81) dans sa partie qui relie les bras (79, 80), de sorte qu'un bref écartement des bras (79, 80) est permis lors d'un déplacement en rotation de la première partie de piston (21).

23. Amplificateur de force de freinage à dépression selon l'une des revendications précédentes, caractérisé en ce que la surface périphérique de la seconde partie de piston (21) est constituée, au moins en partie, d'une forme profilée à plusieurs pans (74).

Fig. 1

Fig. 2

Fig. 3

Fig. 4

Fig. 5

Fig. 6

Fig. 7

Fig. 8